# EUROPEAN PATENT APPLICATION

(11) **EP 1 541 866 A2**
(43) Date of publication of application: **15.06.2005**
(21) Application number: 04386033.7
(22) Date of filing: 06.12.2004
(51) Int. Cl.: F03D 3/06

(54) **Wind turbine with cyclic relative movement of the rotor blades**

(30) Priority: 09.12.2003 GR 2003100516
(71) Applicant: Lazouras, Andreas, 17456 Alimos Attikis (GR)
(72) Inventor: Lazouras, Andreas, 17456 Alimos Attikis (GR)

(57) **Abstract**

A wind turbine with a rotor of horizontal spin consists of the base (tower and perpendicular axis), the rotor and the inner frame.

(Fig. 6)

The inner frame (c) rotates independently ±360° and its position is continuously determined by the direction of the wind (Fig. 4-5). On its outer side it has a guideway (d) (Fig. 6, 9A).

The rotor, which rotates independently 360°, is made up of the rotor frame (b) and the blades (a). The blades, apart from their rotation with the rotor frame, rotate around their own axis 0°→ 90°→ 0° (Fig. 6a, b). This is succeeded via the extensions (e), which spread to the guideway (d) of the inner frame.

For a moment we assume that the inner frame (c) is still, oriented by the direction of the wind) and the blades (a) are horizontal, perpendicular or in the intermediate position (Fig. 9B). The impact of the wind on the perpendicular blades pushes them and makes them turn, rotating the rotor. During this rotation, the blades that follow rotate via their extensions (e), which move on the guideway (d) in the perpendicular position to accept the impact - thrust of the wind, while the previous ones return to the horizontal position e.t.c.

## Description

The invention refers to a wind turbine, the rotor of which, based on a vertical axis, rotates horizontally, with a successive rotation of its blades from the horizontal to the vertical position and vice versa, so that the blades that are in a perpendicular position accept directly all the impact of the wind and the rotation of the rotor is succeeded, while the rest of the blades, which are in a horizontal position, present the least possible resistance to the wind during rotation.

Wind turbines that are placed on high or very high towers (up to 100m) leaning on a horizontal axis are known and have wide (almost exclusive) practical application. The most well known form is the one, the rotor of which is made up of three independent blades of variable pitch of long or very long expansion. The development of this strategy due to the wide spread of the blades, the high pressure along with the overturning moment which is developed, combined with the height of the towers, is about to (if it has not already) reach its limits.

The wind turbine with a rotor of horizontal spin, according to this patent, has the characteristic that while the rotor rotates horizontally, its blades turning around their own axis, move successively from the horizontal to the perpendicular position and vice versa so that they are found at the appropriate stage of the rotation of the rotor, vertical to the direction of the wind to take advantage of the maximum possible energy. As the rotation continues and the blade(s) that follow(s) are found in a vertical position, the precedent blade(s) return to the horizontal position, so that while they rotate they have the least possible resistance to the wind. The movement - rotation of the blades from the horizontal position to the perpendicular and vice versa (0° - 90° - 0°) during the rotation of the rotor is succeeded through the extensions, which exist on the roots of the blades, and spread up to the guideway, found on the outer surface of the inner frame of the rotor. This inner frame has the same axis with the rotor, rotates independently ±360° and its exact position is continuously determined by mechanic or electronic means, according to the direction of the wind. The purpose of the inner frame is to remain continuously oriented and keep its exact place in relation to the direction of the wind and to lead the extensions of the blades, through the pilot which is included in its outer side, so that at the most appropriate stage of the rotation of the rotor, the blades take successively the vertical and horizontal position to conclude the unobstructed rotation of the rotor and the function of the turbine.
The morphology of the surface of the blades is possible to be aerodynamic so that the blades found rotating at the horizontal position, will be subject to raising forces apart from having the minimum resistance to the wind. This configuration of the blades accompanied with an increase of the revolutions will make the rotor continuously "lighter" and as a result the rotation will become easier.

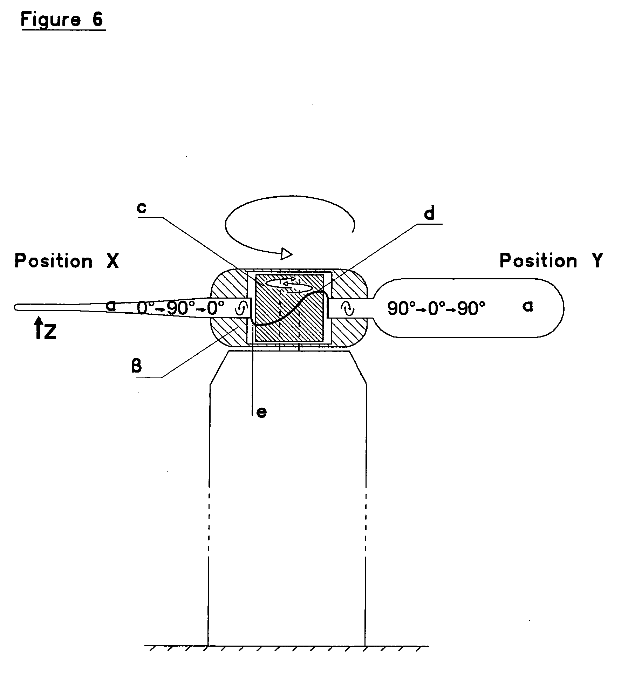

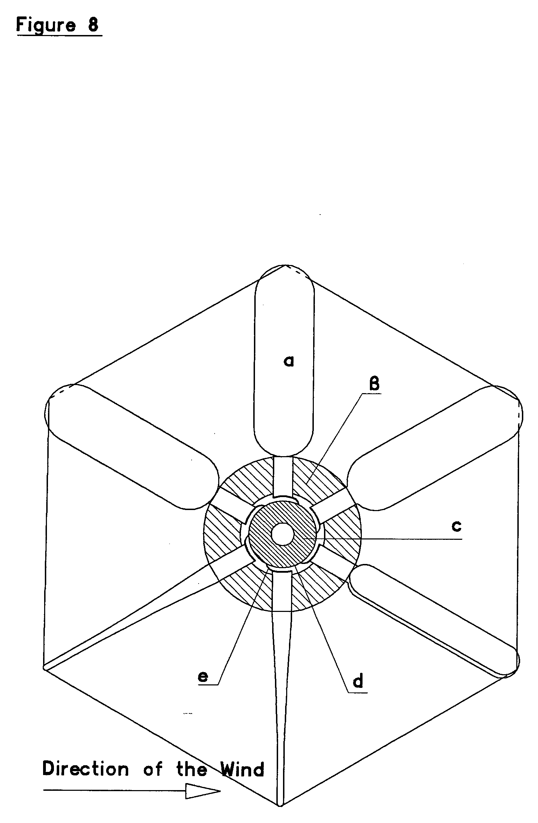

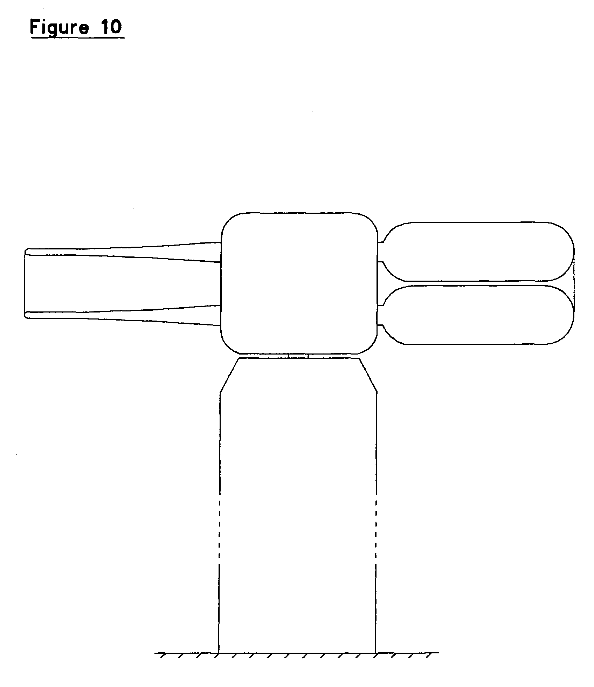

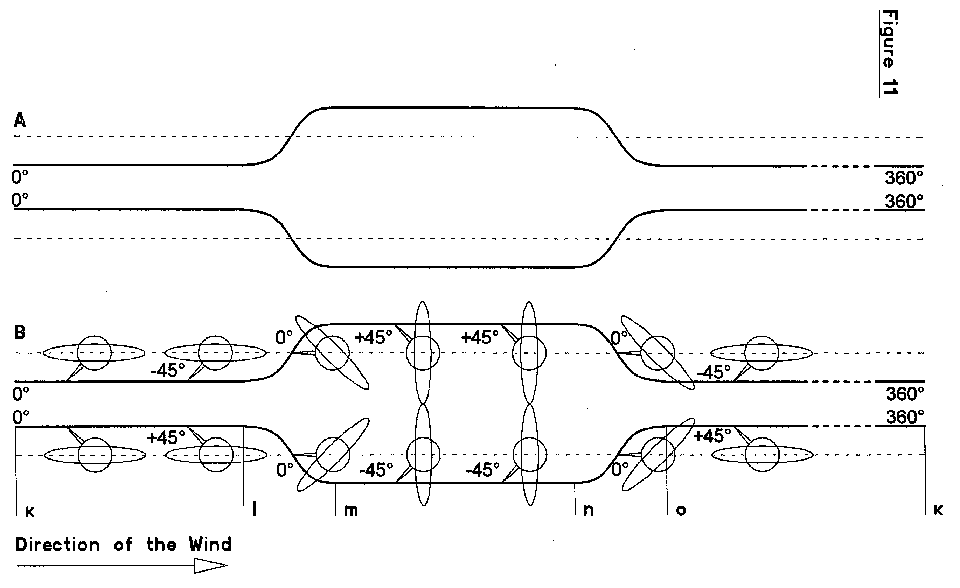

A wind turbine with a rotor of horizontal spin according to the present patent presents numerous advantages.
- An extremely high tower is not required, given the fact that the rotor rotates horizontally and as a result an enlargement of the blades does not necessarily mean a proportional increase in the height of the tower.
- The pressures and the overturning moments are significantly low, since the tower itself is low. The power of the wind, which acts totally on the vertical blades, will act as rotational (without further analysis into two forces, which are enforced on the blade, in a 90° angle).
- The aerodynamic configuration of the blades will create, while they move horizontally, lifting forces (Fig. 6Z), which will make the rotor "lighter" and this tendency will increase as the rotation speed increases.
- Potential connection of the edges of the blades among themselves in the perimeter creates a unified and robust entity that can sustain strain while it respectively aids in the rotational ability of the rotor, because any force developed on one or more blade(s) is transferred on all of the blades, which helps directly and enforces the rotation.
- The combination of a double at height rotor with simultaneous in pairs reverse inward rotation of the blades (Fig. 10, 11b) from the horizontal position to the respective vertical one in the appropriate position of the spin fulfills the prerequisites, due to the encirclement of the wind, for the creation of wind turbines of higher efficiency. The resistance and the efficiency of the double at height rotor are estimated to be improved significantly if the blades are connected in pairs either among themselves (Fig. 10) or perimetrically, separately for each rotor (Fig. 8).
- Finally, the vertical transfer of the rotation directly lower (even down to the base of the tower) is possible with any positive consequences implied.

Figure 1 shows a general front view of the wind turbine (considering the direction of the wind) with the base (tower) and the rotor.
Figure 2, cross section of the inside of the rotor.
Figure 3, cross section of each of the parts of the rotor
   - Blades (a)
   - Rotor frame (b)
   - Inner frame (c) heightened from its natural position for better understanding
   - Guideway (d) on the outer side of the inner frame (c)
   - Extension (e) from the base of the blades (a)
Figure 4, cross section of maintaining of the appropriate position of the inner frame (c) in relation to the direction of the wind in a mechanical way - blade (f) - led directly by the wind.
Figure 5, exactly as in Figure 4, in an electronic - electric way (as in the turbines existing now in the market).
Figure 6, cross section the wind turbine presenting the rotational movement of all of its parts:
   - The frame of the rotor itself (b) rotates in one direction 360°.
   - The blades (a) rotating with the frame (b), also move independently from it, from the horizontal position to the vertical and vice versa (0° - 90° - 0°).
   - The inner frame (c) moves independently ±360°. Its position is adjusted mechanically or electronically - electromechanically, continuously oriented by the direction of the wind so that the vertical blade(s) are always found at the appropriate stage of the rotation of the rotor vertical to the direction of the wind.

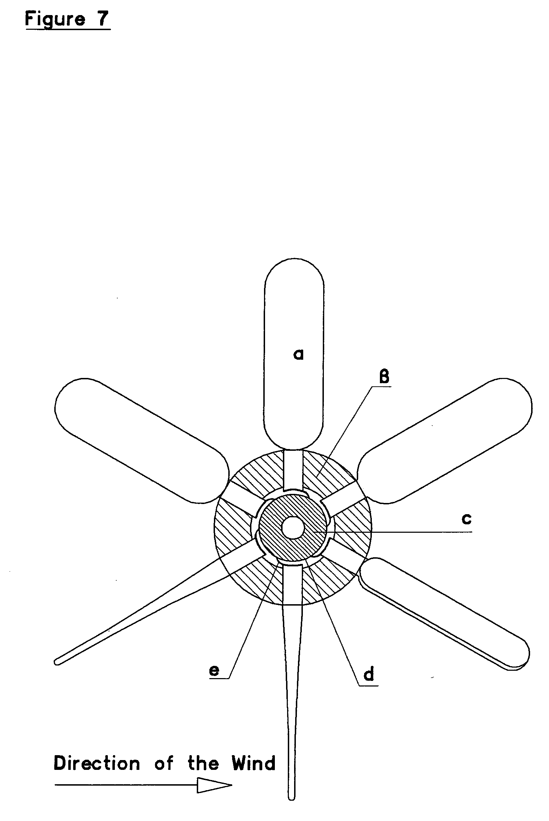

Figure 7, ground plan in cross section of all the parts of the rotor, inner frame and central axis (the number of blades is random).
Figure 8, as in Figure 7, with a perimetric connection of the blades.

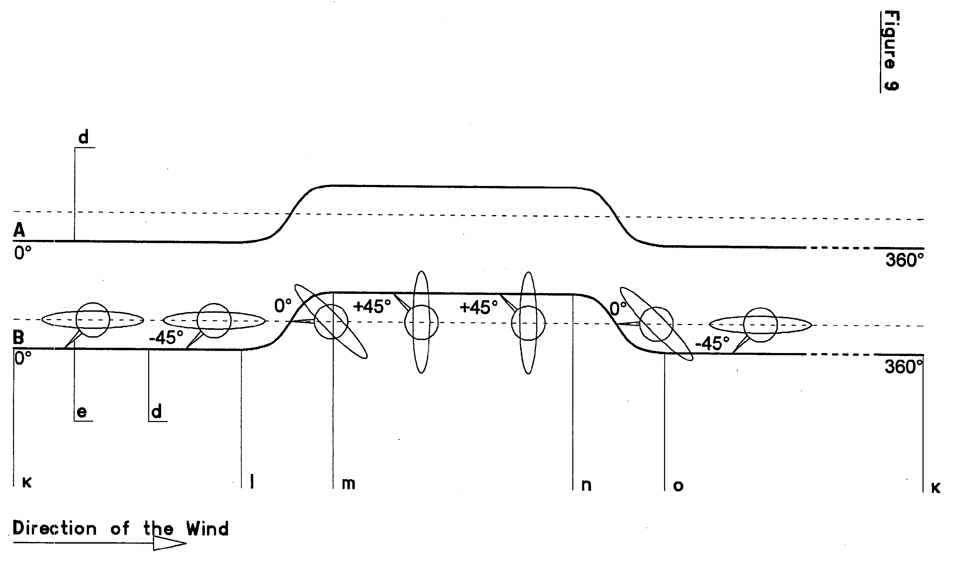

Figure 9A, the form of the guideway (d) that is on the outer side of the frame (c) fully developed (0° - 360°).
Figure 9B, the successive position of each blade (0° - 90° - 0°) (a) during the full rotation (0° - 360°) of the rotor (b) and the respective position of the extension (e) on the guideway (d) (-45° +45° -45°).
Figure 10, the view of the wind turbine with a double at height rotor with blades connected vertically in pairs.
Figure 11A, the form of the guideways of a double at height rotor found on the outer side of the inner frame (c) fully developed (0° - 360°).
Figure 11B, the successive position of the blades in pairs of a double at height rotor in a full rotation (0° - 360°).

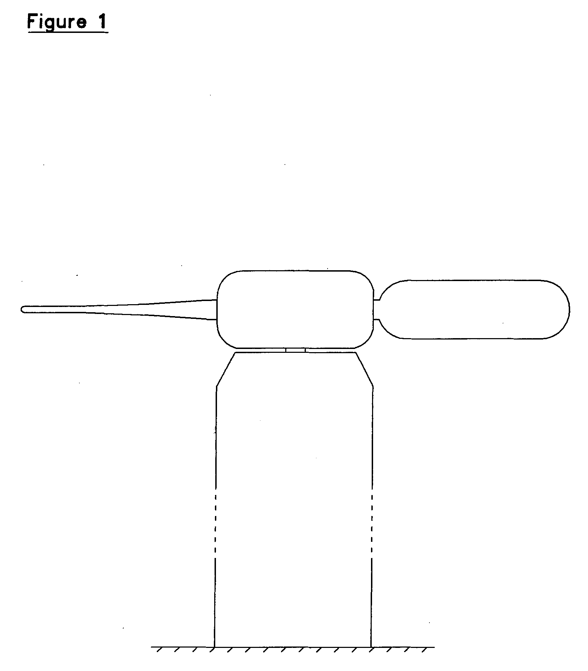

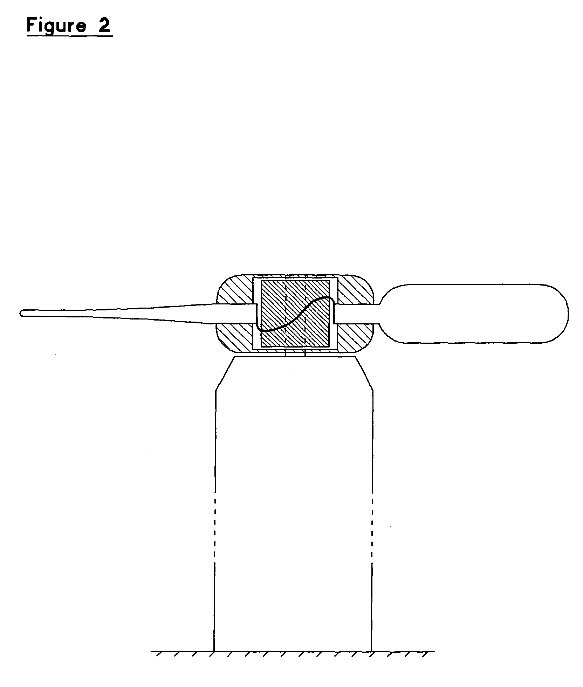

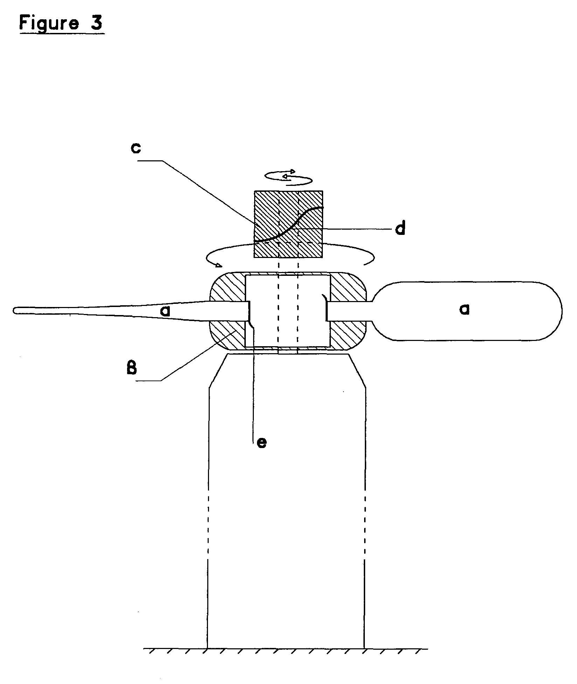

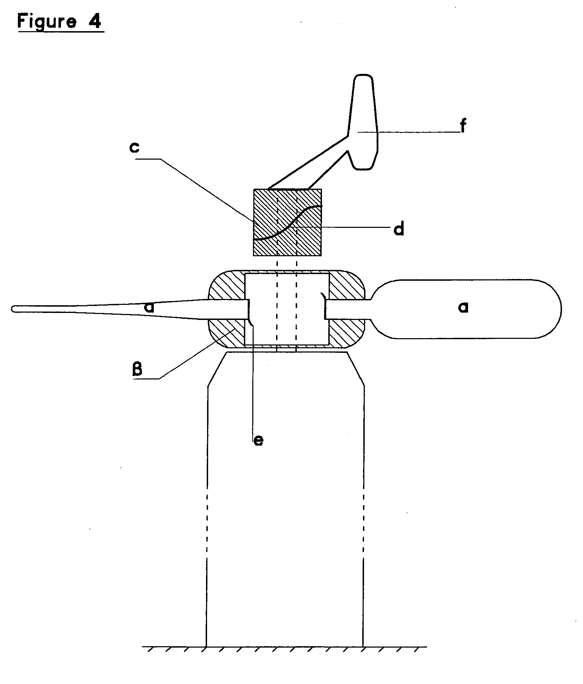

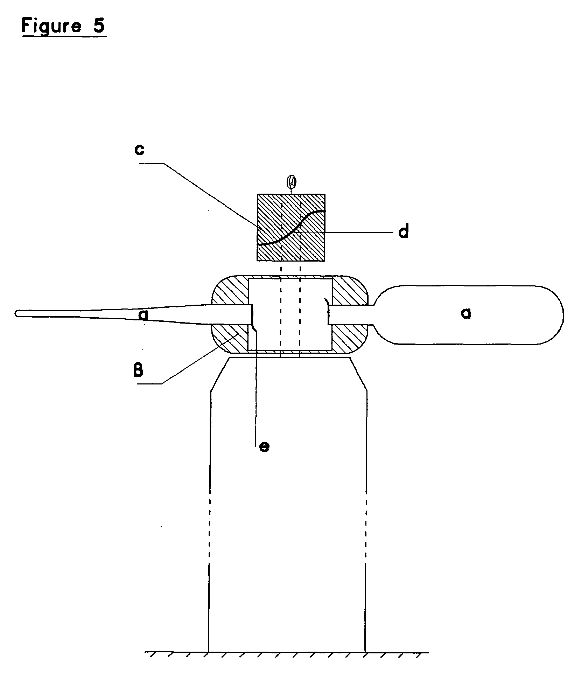

The patent is described below with the aid of the attached figures 1-11.
The wind turbine with a rotor of horizontal spin consists of:
- The base - tower with the perpendicular axis, on which the rotor (b) and the inner frame, which is inside the rotor (c), rotate (Fig 6).
- The inner frame (c), is based on the same axis with the rotor (b), and moves independently of it (the rotor) ±360°. Its position is determined by the direction of the wind, continuously oriented mechanically (Fig. 4) or electronically - electromechanically (Fig. 5). On its outer side it has a guideway (d), on which the edges of the extensions (e) of the blades move. The form of the guideway can be seen fully developed (0° - 360°) in Figure 9A, as well as the movement of the edges of the extensions (e) with the respective rotation of the blades themselves (0° - 360°), which is fully described in figure 9B. The purpose of this inner frame (c) is to remain continuously oriented, as above, by the direction of the wind, so that at the appropriate stage of the rotation of the rotor (b) to rotate the blades (a) from the horizontal to the vertical position and vice versa.
- The rotor, consisting of the rotor frame (b) and the blades (a), which are oriented on the frame of the rotor (b). The rotor, as well as the inner frame (c), is based on the vertical axis of the tower and moves independently of the inner frame in one direction 360°. Between the rotor (b) and the axis there is the inner frame (c), as one can in detail examine in Fig. 6 (described above). The purpose of the rotor is to rotate on its axis with its blades and so to convert the energy of the wind to rotational first and then to electricity using the appropriate arrangement. The blades are adjusted on the frame of the rotor Fig. 6, 7 (the number of blades varies). They rotate along with the frame of the rotor and they also move independently, from the horizontal to the vertical position and vice versa (Fig. 6, 9B). This rotation 0° - 90° - 0° is realized through the extensions (e), which are on the base, the edges of which (the extensions) spread and move on the guideway (d), which is in the outer side of the inner frame (from -45° to +45° and vice versa). When the blades rotate with the rotor frame as a total their purpose is:
   the ones in the vertical position, to accept the pressure - power of the wind and to rotate the rotor and
   the ones in the horizontal position, not only to present the least resistance to the wind, but also, due to their formation (aerodynamic), to have raising powers enforced on them (the blades) Fig. 6Z. The result of this is that the rotor is "lighter" and so its further rotation is made easier.

In full stillness the rotor will obviously remain still. As the speed of the wind increases, the inner frame (c), moving independently, will be oriented according to the direction of the wind. At this stage, while the rotor remains still, the extensions (e) of the blades (a) moving on the lead (d) of the inner frame (c) will correspondingly rotate the blades (a) and when the orientation is completed, some of them will be in the horizontal position (Fig. 9B gap o - k- l), other(s) in the vertical (Fig. 9B gap m - n) and finally the rest in the intermediary stage (Fig. 9B gaps l-m and n - o). When the impact of the wind on the vertical blades overcomes the resistance of the rotor to the rotation, then its rotation will start and so we will have successive rotation and new (the ones that follow) perpendicular blades vertical to the direction of the wind will appear, with respective horizontal positioning of the precedent ones. This circle of the perpendicular positioning of the blades, which are vertical to the direction of the wind, following the respective horizontal positioning of the preceding ones, with the aid of the extensions of the blades (e) and the guideway (d) of the inner frame will rotate the rotor and will transform the kinetic energy of the wind to rotary.
The aerodynamic form of the blades (a) will aid in the maximization of the rotation because when they move horizontally in the gap o - k - l (Fig. 8B), which is more than half of the rotation circle, raising forces 6Z will develop (Fig. 6 position x), which according to the rotation speed of the rotor, will make the rotor "lighter", thus easier to rotate, which means an increase in the rotation speed.
Potential connection of the edges of the blades among themselves in the perimeter (Fig. 8) creates a uniform and robust entity, that is resistant to stresses, while it respectively helps the rotational ability of the rotor, because any force developed on one or more blades will perimetrically be transferred as rotation force on all of the blades, which helps indirectly and enforces the rotation.
The combination of a double at height rotor with a simultaneous in pairs reverse outward movement of the blades (Fig. 10, 11A, B) from the horizontal position to the respective vertical one, at the appropriate position of the rotation, fulfills the prerequisites to develop wind turbines of higher efficiency, due to the encirclement of the wind.
The durability and efficiency of the double at height rotor are estimated to be improved significantly if the blades are connected in pairs perpendicularly among them (Fig. 10) or even perimetrically each rotor separately.
Finally, the perpendicular transfer of the rotation directly lower in the rotor (down to the base of the tower) is possible, a fact that implies further positive results.

## Claims

1. Wind turbine with a rotor of horizontal spin (Fig. 3-6) **characterized by** the fact that while the rotor (b) leans on a perpendicular axis and rotates on a horizontal plane, its blades (a) rotate successively around their own axis and move from the horizontal to the perpendicular position and vice versa, so that when the wind strikes on the perpendicular blades (Fig. 6 position y) the rotation of the rotor is succeeded, while the rest of the blades which take the horizontal position (Fig. 6 position x) rotating in the same way present the minimum possible resistance to the wind.

2. Wind turbine with a rotor of horizontal spin according to claim 1, **characterized by** an inner frame (Fig. 6c), having the same axis with the rotor (b), which moves independently ±360° and has a guideway on its outer side (Fig. 3d, 6d, 9A, B), on which the edges of the extensions of the blades (e) are led, during the rotation of the rotor, from the horizontal to the perpendicular position and vice versa. This inner frame is led either directly by a perpendicular blade (Fig. 4f) or indirectly by an electronic - electro mechanic arrangement (Fig. 5) and the guideway (d) lead the blades through the extensions (e) to the programmed gaps of the full rotation of the rotor from the perpendicular to the horizontal position and vice versa.

3. Wind turbine with a rotor of horizontal spin according to claims 1 and 2, **characterized by** mobile blades (a), which, during the rotation of the rotor, move around their own axis from 0° to 90° and vice versa through an extension (e), which spreads from their base to the guideway (d), that is found on the outer side of the inner frame (c). The guideway has such an arrangement (Fig. 9A, B) that the edge of the extension moves from -45° to +45° and vice versa (Fig. 9A, B) and as a result, the movement of the extensions is made easier and the blades movement corresponds from 0° to 90° and vice versa.

4. Wind turbine with a rotor of horizontal spin according to claims 1-3, **characterized by** the fact that its blades (a) have aerodynamic form, so when they move horizontally (Fig. 9B gap o-k-l), on the one hand, they have the least possible resistance to the wind and on the other hand, raising forces are developed on them (Fig. 6Z) so that the whole system is "lighter" and as a result the rotation is easier.

5. Wind turbine with a rotor of horizontal spin according to claims 1-4, **characterized by** the fact that it is possible for the blades to be connected among themselves in the perimeter with a simple connection (Fig. 8) so that the whole system is robust and its rotation is made easier.

6. Wind turbine with a rotor of horizontal spin according to claims 1 - 5, **characterized by** the double at height rotor with its blades parallel in pairs (Fig. 10) moving from the horizontal to the perpendicular position, with reverse towards the inside movement (Fig. 11 gap l-m) so that the wind is encircled among the blades, to take advantage of even more energy.

7. Wind turbine with a rotor of horizontal spin according to claims 1 - 6, **characterized by** the fact that the blades of the double at height rotor may be connected in pairs among themselves, as well as around the rotor in the perimeter to end up with a more robust structure that will make the rotation easier and more efficient.
